# EUROPÄISCHE PATENTSCHRIFT

(11) **EP 0 463 482 B1**
(45) Veröffentlichungstag und Bekanntmachung des Hinweises auf die Patenterteilung: **10.05.1995**
(21) Anmeldenummer: 91109669.1
(22) Anmeldetag: 13.06.1991
(51) Int. Cl.: D03D 27/00, D04B 1/00, B29C 70/02

(54) **Stoffbahn für die Verbundbauweise**
Length of cloth for compound structures
Nappe de tissu pour structure combinée

(30) Priorität: 22.06.1990 DE 9006958 U
(43) Veröffentlichungstag der Anmeldung: 02.01.1992
(73) Patentinhaber: PARABEAM Industrie- en Handelsonderneming B.V., NL-5705 AL Helmond (NL)
(72) Erfinder: Verpoest, Ignace H.J.M., B-3030 Leuven (BE); Van der Vleuten, Peter, NL-5421 PE Gemert (NL)
(74) Vertreter: Henseler, Daniela, Dr., Patentanwälte, Sparing, Röhl, Henseler

(56) Entgegenhaltungen:
- EP-A- 0 352 770
- DE-A- 3 417 539
- DE-C- 2 063 694
- FR-A- 1 041 888
- FR-A- 1 284 703
- FR-A- 2 139 234

## Beschreibung

Die Erfindung betrifft eine Stoffbahn für die Verbundbauweise, bestehend aus einer textilen Grundware mit eingebundenen Noppen.

Derartige textile Flächengebilde dienen als Verstärkungskomponente in der Verbundbauweise. Aus EP-0 352 770 (A2) ist ein faserverstärkter Verbundwerkstoff bekannt, bei dem die Verstärkungskomponente von einer Grundware gebildet wird, die beidseitig mit einer Flor- oder Schlingendecke versehen ist. Hierdurch soll erreicht werden, daß die Verstärkungskomponente neben der x- und y-Richtung auch in der z-Richtung wirkt, da die mechanischen und thermischen Eigenschaften, wie z.B. Elastizitätsmodul, Festigkeit und Dimensionsstabilität im Verbund maßgebend von der Verstärkungskomponente bestimmt werden, wodurch vielseitige und leistungsfähige Werkstoffe entstehen. Voraussetzung für diese guten Eigenschaften ist allerdings die gute Haftung zwischen der Verstärkungskomponente und den übrigen Materialien des Verbundes, um ein Delaminieren zu vermeiden. Eine Grundware mit einer ein- oder zweiseitigen Faser- oder Schlingendecke gemäß einem Veloursgewebe auszustatten, verbessert zwar aufgrund der Vielzahl der offenen oder geschlungenen Faserenden die interlaminare Scherfestiqkeit, ohne jedoch eine dauerhafte Anbindung auch bei hoher Druck- oder Schubbeanspruchung zu gewährleisten. Zur Verbesserung der Anbindung der Verstärkungskomponente werden daher sogenannte Haftvermittler eingesetzt. Diese Haftvermittler haben sich jedoch als nachteilig herausgestellt, da die erreichbare interlaminare Scherfestigkeit im Verbund nicht ausreicht und eine jeweils individuelle Abstimmung der Verbundwerkstoffe notwendig ist.

Aus FR-1 041 888 (A) ist ein Mokett mit einer Flordecke bekannt, bei dem die Flornoppen zur Ausbildung von Mustern verschieden hoch ausbildbar sind. Ebenso wie bei einer Flordecke einheitlicher Höhe wird keine dauerhafte Anbindung in einem Verbundwerkstoff erreicht, da die Flordecke eine Art Abgleitfläche entlang ihrer Flordeckenspitzen bildet, die bei einer Flordecke mit unterschiedlichen Florhöhen ebenso ausgebildet wird.

Aufgabe der Erfindung ist es daher, eine Stoffbahn für die Verbundbauweise zu schaffen, die dem Verbund gute mechanische Eigenschaften verleiht und dabei eine dauerhafte Anbindung ermöglicht.

Diese Aufgabe wird gemäß dem kennzeichnenden Teil des Anspruchs 1 gelöst.

Hierdurch wird eine Stoffbahn geschaffen, mit der dem Verbund ein gewünschtes Eigenschaftsprofil hinsichtlich Festigkeit, Steifigkeit und Dimensionsstabilität gegeben werden kann. Die in die Grundware eingebundenen Noppen gestalten die Grundware einseitig mit Verankerungselementen aus, wobei zumindest zwei unterschiedliche Längen für die Noppen sowie zumindest zwei verschiedene Strichrichtungen für ein zuverlässiges Greifen der Noppen in einen erhärtbaren Werkstoff des Verbundes sorgen. Je nach Richtung einer einwirkenden Druck- und Schubbeanspruchung kann die eine oder andere Art der gerichteten Noppen eine stärkere Spannungsableitung ermöglichen. Die unterschiedlichen Längen erlauben die Ausbildung einer in der Tiefe variierenden Haftzone, die zu einer zahnartigen Anbindung führt. Die resultierende interlaminare Scherfestigkeit des Verbundes ist folglich hoch, und die Gefahr des Delaminierens der textilen Einlage ist dauerhaft reduziert. Die vereinzelte Anordnung der Noppen gewährleistet eine nur geringe Gewichtszunahme der Stoffbahn.

Dabei können jeweils eine Noppe einer ersten Art und eine Noppe einer zweiten Art ein in die Grundware eingelegtes Noppenpaar bilden, wodurch die Spannungsableitung unterstützt und eine feste Einbindung der Noppen in die Grundware gewährleistet wird. Die Noppen eines Noppenpaares sind vorzugsweise zueinander beabstandet angeordnet mit einem Abstand von vorzugsweise 3 bis 31 mm, insbesondere 10 bis 20 mm, um eine lokalisierte Anbindung der Polymermatrix zu erreichen. Eine besonders gleichmäßige Anbindung kann zudem durch eine identische Ausbildung der einzelnen Noppenpaare der in die Grundware eingelegten Noppen erreicht werden.

Die Noppen können durch Webtechnik oder Maschentechnik in die Grundware eingebunden sein. Die Grundware kann gewebt, gewirkt oder gestochen sein. Die Noppen können aufgeschnitten (Flornoppen) oder geschlossen (Schlingnoppen) ausgebildet sein. Als Verstärkungskomponente wird eine gewebte Grundware bevorzugt wegen der Linearität von Kett- und Schußfadensystem. Die Noppen werden vorzugsweise durch ein oder mehrere Polkettensysteme gebildet, die in das Grundgewebe einbinden. Vorzugsweise umschlingen die Polketten mehrere Schußfäden in einer W-Bindung. Die Bindung des Grundgewebes kann Leinwand, Rips, gemischter Rips, Panama, Atlas oder Köper sein. Vorzugsweise wird eine lockere Grundbindung gewählt, die eine gute Drapierbarkeit des Verstärkungsmaterials gewährleistet.

Die Länge der Noppen liegt im Bereich zwischen 0,5 und 8 mm, vorzugsweise bei 1 bis 3 mm. Die Dichte der Noppen liegt in einem Bereich von 0,5 Noppen/cm² und 20 Noppen/cm², vorzugsweise 2 bis 10 Noppen/cm². Neben der Steuerung der Anzahl und Länge der Noppen ist auch deren gleichmäßige Verteilung auf der vorderen Seite der Grundware variierbar. Vorzugsweise sind in Kettrichtung die Noppen einer gewählten Länge und einer Strichrichtung entlang einer Geraden mit Abstand hintereinander angeordnet. In Schußrichtung können abwechselnd Geraden mit Noppen einer ersten Länge und Strichrichtung mit Noppen einer zweiten Länge und Strichrichtung abwechseln.

Die Grundware kann auch zweiseitig mit Noppen ausgebildet sein, wobei die aus der Rückseite der Grundware heraus, ragenden Noppen vorzugsweise in einer Strichrichtung verlaufen und eine Länge bis 1,5 mm besitzen.

Als Fasermaterial für die Grundware sind natürliche, gemischte und insbesondere synthetische Fasern, wie z.B. Polyester, Polyacrylnitril, Polyvinylchlorid, Polyamid, verwendbar. Vorzugsweise werden hochfeste Fasern aus Glas, Kohlenstoff, Aramid oder hochfestem Polyethylen eingesetzt. Die Fasern können dabei entweder als Stapelfasern zu Garnen versponnen oder zu Multi- und/oder Monofilamentgarnen verarbeitet sein. Je nach Größe und Richtung der zu erwartenden Beanspruchungen kann die Grundware aus gleichen oder verschiedenen Fasern bestehen. Beispielsweise können die Kettfäden aus Polyester und die Schußfäden aus Aramid bestehen. Für die Noppen kann gegebenenfalls eine dritte Faserart verwendet werden.

Die Stoffbahn kann die Verstärkungskomponente eines Verbund- und Hybridwerkstoffs mit einer aushärtbaren Polymermatrix bilden. Hierdurch wird ein Verbund- und Hybridwerkstoff geschaffen, der unter äußerer Belastung wie Biegung, Querkraft und -torsion zu einer verminderten Rißbildung neigt und bedingt durch die Gewebestruktur eine hohe Quersteifigkeit aufweist. Für eine gute Ankopplung von Verstärkungskomponente und Polymermatrix sorgen die Noppen. Die Anpassung des Eigenschaftsprofils des Verbund- und Hybridwerkstoffs an bestimmte Beanspruchungssituationen kann folglich über eine Modifizierung der Grundware und/oder Wahl des Fasermaterials erfolgen. Die Aufteilung der Last zwischen Gewebe und Polymermatrix hängt auch vom Volumengehalt der Komponenten ab. Der Volumengehalt des Gewebes kann geändert und angepaßt werden durch den Einbau mehrerer Lagen der Stoffbahn in das Laminat. Beim Aufbau eines Laminats können die Stoffbahnen unterschiedlich geschichtet werden, und zwar Vorderseite-zu-Vorderseite, Vorderseite-zu-Rückseite, Rückseite-zu-Rückseite. Vorzugsweise werden 2 bis 16 Lagen der Stoffbahn in die Polymermatrix eingelegt, wobei die Ausrichtung der einzelnen Lagen bezüglich Kopfseite und Rückseite variieren kann.

Als Matrix-Kunststoffe sind unter anderem verwendbar bei den Thermoplasten: Polyamide, Polypropylen, Polybutylen- und Polyethylenterephthalat, Polyacetat, ABS und Polycarbonat, bei den Elastorteren: Kautschuk und Polyurethane, bei den duromeren Reaktionsharzen: die ungesättigten Polyester (UP-Harze), Epoxide und Vinylester.

Schließlich kann der Werkstoff mit einer wasserabweisenden Beschichtung ausgestattet sein, die bei Einsatz dieser Verbund- und Hybridwerkstoffe im Schiffsbau von Bedeutung ist. Diese Beschichtung kann aus Silikonkautschuk der Polyurethan bestehen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch eine seitliche Draufsicht einer Stoffbahn,
- Fig. 2: zeigt schematisch einen Querschnitt eines Teilstücks der Stoffbahn mit einer gewebten Grundware,
- Fig. 3: zeigt schematisch einen teilweisen Querschnitt eines Laminats mit einer ersten Grundanordnung der Stoffbahnen,
- Fig. 4: zeigt schematisch einen teilweisen Querschnitt eines Laminats mit einer zweiten und dritten Grundanordnung der Stoffbahnen.

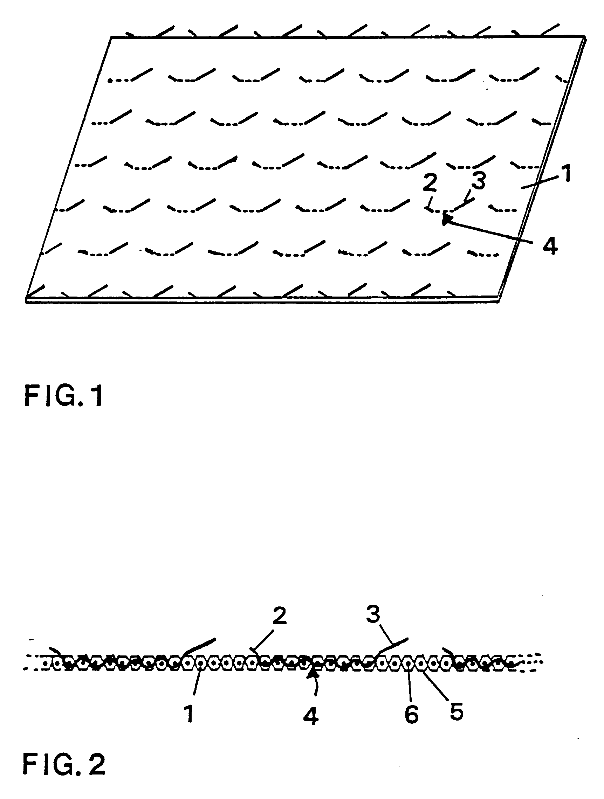

Figur 1 zeigt eine textile Grundware 1, in die einzelne Noppen 2, 3 unterschiedlicher Länge und verschieden gerichteter Neigung eingebunden sind. Gemäß Figur 1 besitzt eine erste Art von Noppen 2 eine kurze Länge und ragt in einer ersten Strichrichtung, beispielsweise in Kettrichtung nach links, aus einer Vorderseite der Grundware 1 heraus. Eine zweite Art von Noppen 3 besitzt eine größere Länge und ragt in einer zweiten Strichrichtung, beispielsweise in Kettrichtung nach rechts, ebenfalls aus der Vorderseite der Grundware 1 heraus. Vorzugsweise sind die Noppen 2, 3 geringfügig gegenüber der Ebene der Grundware 1 aufgerichtet und die Strichrichtungen verlaufen entgegengesetzt zueinander. Die Länge der Noppen 2, kann 0,5 bis 5 mm betragen, vorzugsweise 0,5 bis 1,5 mm. Die Länge der Noppen 3 kann 1,5 bis 8 mm betragen, vorzugsweise 1,5 bis 4 mm. Insgesamt vorzugsweise liegt die Länge der Noppen 2 und 3 im Bereich zwischen 1 und 3 mm. Die Gesamtdichte der Noppen 2 und 3 liegt zwischen 0,5 Noppen/cm² und 20 Noppen/cm², vorzugsweise bei 2 bis 10 Noppen/cm². Die Noppen 2 und 3 können dabei jeweils das freie Ende eines in die Grundware 1 eingelegten Polfadens 4 sein. Eine Noppe 2 der ersten Art und eine Noppe 3 der zweiten Art bilden somit ein in die Grundware 1 eingelegtes Noppenpaar, wobei die ein Paar bildenden Noppen 2, 3 zueinander beabstandet sind mit einem Abstand zwischen 3 und 31 mm, vorzugsweise 10 bis 20 mm. Hinsichtlich Länge und Strichrichtung bilden die Noppen 2, 3 vorzugsweise identische Noppenpaare. Die Verteilung der einzelnen Noppen 2, 3 entlang der Vorderseite erfolgt gleichmäßig, indem die Noppen 2, 3 mit Abstand und abwechselnd angeordnet sind. Vorzugsweise sind die Noppen 2 und 3 jeweils linienförmig in Längsrichtung mit Abstand und gegebenenfalls seitlich versetzt aneinandergereiht, wobei sich in Querrichtung die Noppen 2 und 3 abwechseln. Neben der einseitigen Ausgestaltung der Grundware 1 mit Noppen 2, 3 auf der Vorderseite kann auch eine zweiseitige Ausgestaltung der Grundware 1 mit eingebundenen Noppen erfolgen, die sich dann von der Rückseite der Grundware 1 erstrecken. Die Länge dieser rückseitigen Noppen liegt bei 0,5 bis 1,5 mm. Vorzugsweise sind die Noppen 2, 3 auch räumlich gleichmäßig über eine Vorderseite der Grundware 1 verteilt, es können aber auch Teilbereiche ausgespart sein.

Die Grundware 1 kann gewebt, gestrickt, gewirkt, getuftet oder als Raschelware ausgebildet sein. Die Polfäden 4 können folglich durch Web- oder Maschentechnik in die Grundware 1 eingebunden sein. Die Noppen 2, 3 können dabei als Fadenenden geschnitten oder geschlungen ausgebildet sein.

Figur 2 zeigt den Aufbau einer Stoffbahn mit einer Grundware 1 aus einem Flachgewebe. Das Flachgewebe besteht aus sich kreuzenden Kettfäden 5 und Schußfäden 6, die in Leinwandbindung binden. Neben der Leinwandbindung kann die Bindung des Gewebes auch Rips, gemischter Rips, Panama oder auch Köper bzw. Atlas sein. In die Grundware 1 sind Polfäden 4 eingewebt, und zwar durch eine W Schuß Polbindung, bei der der Polfaden 4 mehrere Schußfäden 6 umschlingt. Vorzugsweise umschlingt der Polfaden 4 zwischen 5 und 15 Schußfäden 5. Die Noppen 2, 3 bilden die freien Enden der Polfäden 4 und erstrecken sich in Schußrichtung links- und rechtsgerichtet mit geringer Neigung zur Ebene der Grundware 1. Hergestellt wird eine solche Stoffbahn aus einem Doppelpolgewebe mit Ober- und Unterware sowie dazwischen hin- und herwechselnden Polfäden 4, die anschließend zerschnitten werden.

Die Garne für die Grundware 1 und die Noppen 2, 3 können aus natürlichen, gemischten oder synthetischen Fasern bestehen, die als Stapelfasern, Multifilamente oder Monofilamente zu Garnen verarbeitet sein können. Zu den synthetischen Fasern zählen beispielsweise Polyester, Polypropylen, Polyacrylnitril, Polyamid. Bevorzugt werden jedoch hochfeste Fasern aus Glas, Kohlenstoff, Aramid oder hochfestem Polyethylen verwendet. Wegen der besonders guten Steifigkeit von Glas ist insbesondere die Herstellung der Stoffbahn aus Glasfasern vorteilhaft. Desweiteren können die Garne für die Grundware 1 einerseits und die Noppen 2, 3 andererseits aus unterschiedlichen Fasern bestehen. Beispielsweise kann für die Noppen 2, 3 ein hochfestes Aramidgarn eingesetzt werden, während für die Grundware 1 ein Garn aus normalen synthetischen Fasern verwendet wird.

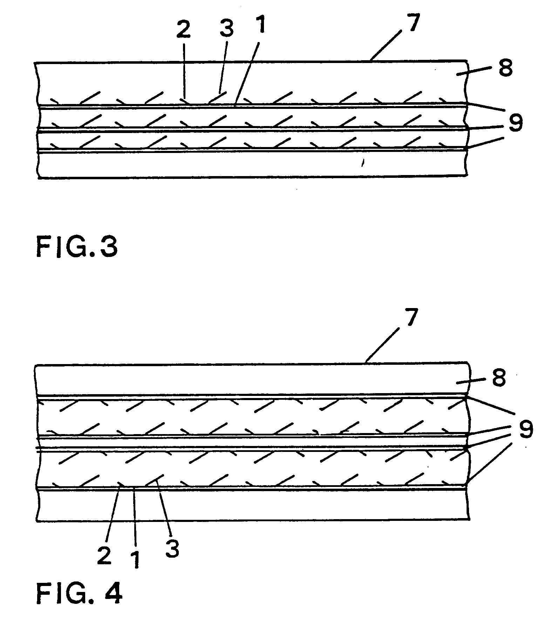

Die Figuren 3 und 4 zeigen ein erstes und ein zweites Ausführungsbeispiel eines Laminats 7 eines Verbund- und Hybridwerkstoffs mit einer Polymermatrix 8, in die Verstärkungseinlagen 9 aus den vorstehend beschriebenen Stoffbahnen eingebettet sind. In dem Laminat 7 können die Stoffbahnen in verschiedenen Grundanordnungen zueinander in der Polymermatrix 8 übereinander geschichtet sein.

Figur 3 zeigt eine erste Grundanordnung von Verstärkungseinlagen 9 in Form der beschriebenen Stoffbahnen, die übereinandergeschichtet sind mit Vorderseite-zu-Rückenseite.

Figur 4 zeigt eine zweite und dritte Grundanordnung der Verstärkungseinlagen 9 in Form der beschriebenen Stoffbahnen, die derart übereinander geschichtet sind, daß einerseits Vorderseite-zu-Vorderseite und andererseits Rückseite-zu-Rückseite aneinanderliegen.

Die Zahl der Verstärkungseinlagen 9 in einem Laminat 7 kann zwischen 2 und 16 Lagen liegen, vorzugsweise 6 bis 16.

Kunststoffe für die Polymermatrix sind Thermoplaste wie Polyamide, Polypropylen, Polybutylen- und Polyethylenterephthal, Polyacetal, Acryl-Butadien-Styrol-Copolymerisate (ABS) und Polycarbonat; Elastomere wie Kautschuk und Polyurethan; sowie duromere Reaktionsharze wie die ungesättigten Polyester (UP-Harze), Epoxide und Vinylester. Dazu kommt die große Anzahl der härtbaren Formmassen auf Basis Pheno- und Aminoplast.

Für eine wasserabstoßende Ausbildung des Laminats 7 kann dieses noch mit einer Beschichtung aus z.B. Silikonkautschuk versehen sein.

## Patentansprüche

1. Stoffbahn für die Verbundbauweise, bestehend aus einer textilen Grundware mit eingebundenen Noppen, dadurch gekennzeichnet, daß mindestens zwei Arten von Noppen (2, 3) mit unterschiedlicher Länge und Strichrichtung von den jeweils beiden freien Enden eines in die Grundware (1) eingelegten Polfadens (4) gebildet werden, die vereinzelt verteilt aus einer **freiliegenden** Vorderseite der Grundware (1) herausragen.

2. Stoffbahn nach Anspruch 1, dadurch gekennzeichnet, daß die Noppen (2, 3) von Noppen (2) einer ersten Art und Noppen (3) einer zweiten Art gebildet werden, wobei eine Noppe (2) der ersten Art und eine Noppe (3) der zweiten Art jeweils ein in die Grundware (1) eingelegtes Noppenpaar bilden.

3. Stoffbahn nach Anspruch 2, dadurch gekennzeichnet, daß die ein Paar bildenden Noppen (2, 3) zueinander beabstandet aus der Grundware (1) herausragen.

4. Stoffbahn nach Anspruch 3, dadurch gekennzeichnet, daß der Abstand 3 bis 31 mm, vorzugsweise 10 bis 20 mm, beträgt.

5. Stoffbahn nach einem der Ansprüche 1 bis 4, dadurch gekennzeichnet, daß die Noppen (2, 3) hinsichtlich Länge und Strichrichtung identische Noppenpaare bilden.

6. Stoffbahn nach einem der Ansprüche 1 bis 5, dadurch gekennzeichnet, daß die Noppen (2, 3) gleichmäßig verteilt aus der Vorderseite der Grundware (1) herausragen.

7. Stoffbahn nach einem der Ansprüche 1 bis 6, dadurch gekennzeichnet, daß die Noppen (2, 3) mit zwei entgegengesetzt zueinander verlaufenden Strichrichtungen aus der vorderen Seite der Grundware (1) herausragen.

8. Stoffbahn nach Anspruch 1 bis 7, dadurch gekennzeichnet, daß die Noppen (2, 3) jeweils einer Strichrichtung auf jeweils benachbarten Linien über die Grundware (1) verteilt sind, wobei Linien von Noppen (2, 3) der einen und anderen Strichrichtung sich abwechseln.

9. Stoffbahn nach einem der Ansprüche 1 bis 8, dadurch gekennzeichnet, daß die Länge der Noppen (2, 3) zwischen 0,5 und 8 mm liegt.

10. Stoffbahn nach einem der Ansprüche 1 bis 9, dadurch gekennzeichnet, daß die Zahl der Noppen (2, 3) zwischen 0,5 und 20 Noppen/cm², vorzugsweise zwischen 2 und 10 Noppen/cm², liegt.

11. Stoffbahn nach einem der Ansprüche 1 bis 10, dadurch gekennzeichnet, daß die Grundware (1) gewebt, gewirkt oder gestochen ist.

12. Stoffbahn nach einem der Ansprüche 1 bis 11, dadurch gekennzeichnet, daß die Grundware (1) von einem Flachgewebe mit einer lockeren Grundbindung, vorzugsweise einer Panama-, Atlas-, Köper- oder Ripsbindung, gebildet wird.

13. Stoffbahn nach Anspruch 12, dadurch gekennzeichnet, daß die Noppen (2, 3) über mehrere Schußfäden (6) eingebunden sind.

14. Stoffbahn nach einem der Ansprüche 1 bis 13, dadurch gekennzeichnet, daß die Rückseite der Grundware (1) mit Noppen mindestens einer Strichrichtung ausgebildet sind.

15. Stoffbahn nach einem der Ansprüche 1 bis 14, dadurch gekennzeichnet, daß die Noppen (2, 3) mit nach vorn und hinten gerichteter Neigung zur Grundware (1) verlaufen.

16. Stoffbahn nach einem der Ansprüche 1 bis 15, dadurch gekennzeichnet, daß die Grundware (1) und die Noppen (2, 3) von Multifilamenten aus hochfesten Fasern, wie Glas, Kohle, Aramid, gebildet werden.

17. Verbund- und Hybridwerkstoff, bestehend aus einer erhärtbaren Polymermatrix (8) und mindestens einer Verstärkungseinlage (9) in Form einer Stoffbahn nach einem der Ansprüche 1 bis 16.

18. Verbund- und Hybridwerkstoff nach Anspruch 17, dadurch gekennzeichnet, daß mehrere übereinander geschichtete Stoffbahnen in die Polymermatrix eingebettet sind, die in einer Vorderseite-zu-Vorderseite und/oder Vorderseite-zu-Rückseite und/oder Rückseite-zu-Rückseite Schichtung übereinander liegen.

19. Verbund- und Hybridwerkstoff nach Anspruch 17 oder 18, dadurch gekennzeichnet, daß als Polymermatrix Thermoplaste, Elastomere oder ungesättigte Polyester vorgesehen sind.

## Claims

1. Fabric for composite structures, consisting of a textile base fabric with tied-in naps, characterised in that at least two kinds of naps (2, 3) of differing length and pile direction are formed by the respective two free ends of a pile thread (4) engaging the base fabric (1), which naps are singly distributed over and project from an exposed face of the base fabric (1).

2. Fabric according to claim 1, characterised in that the naps (2, 3) are formed by naps (2) of a first kind and naps (3) of a second kind, one nap (2) of the first kind and one nap (3) of the second kind forming in each case a pair of naps engaging the base fabric (1).

3. Fabric according to claim 2, characterised in that the naps (2, 3) forming a pair project from the base fabric (1) at a distance from each other.

4. Fabric according to claim 3, characterised in that the distance is from 3 to 31 mm, preferably from 10 to 20 mm.

5. Fabric according to any one of claims 1 to 4, characterised in that the naps (2, 3) form identical pairs of naps with regard to length and pile direction.

6. Fabric according to any one of claims 1 to 5, characterised in that the naps (2, 3) project from the face of the base fabric (1) in even distribution.

7. Fabric according to any one of claims 1 to 6, characterised in that the naps (2, 3) project from the face of the base fabric (1) with two mutually opposite pile directions.

8. Fabric according to claims 1 to 7, characterised in that the naps (2, 3) of one pile direction are distributed over the base fabric (1) in adjacent lines, lines of naps (2, 3) of the one and the other pile direction alternating.

9. Fabric according to any one of claims 1 to 8, characterised in that the length of the naps (2, 3) is from 0.5 to 8 mm.

10. Fabric according to any one of claims 1 to 9, characterised in that the number of naps (2, 3) is from 0.5 to 20 naps/cm², preferably from 2 to 10 naps/cm².

11. Fabric according to any one of claims 1 to 10, characterised in that the base fabric (1) is woven, knitted or tufted.

12. Fabric according to any one of claims 1 to 11, characterised in that the base fabric (1) is formed by a flat textile fabric having a loose fundamental weave, preferably a Panama, Atlas, twill or rib weave.

13. Fabric according to claim 12, characterised in that the naps (2, 3) are tied in across a plurality of weft threads (6).

14. Fabric according to any one of claims 1 to 13, characterised in that the back of the base fabric (1) is constructed to have naps of at least one pile direction.

15. Fabric according to any one of claims 1 to 14, characterised in that the naps (2, 3) extend with a backward and forward inclination to the base fabric (1).

16. Fabric according to any one of claims 1 to 15, characterised in that the base fabric (1) and the naps (2, 3) are formed by multifilaments of high-strength fibres, such as glass, carbon, aramide.

17. Composite and hybrid material, consisting of a curable polymer matrix (8) and at least one reinforcing intermediate layer (9) in the form of a fabric according to any one of claims 1 to 16.

18. Composite and hybrid material according to claim 17, characterised in that a plurality of superimposed fabrics are embedded in the polymer matrix, which fabrics are arranged front to front and/or front to back and/or back to back.

19. Composite and hybrid material according to claim 17 or 18, characterised in that thermoplastics, elastomers or unsaturated polyesters are provided as the polymer matrix.

## Revendications

1. Bande d'étoffe pour l'élaboration des composites, constituée d'une base textile comportant des nopes intégrées, caractérisée en ce qu'au moins deux types de nopes (2, 3) de longueurs et de, directions d'orientation différentes sont formés par, respectivement, les deux extrémités libres d'un fil de poil (4) inséré dans la base (1), qui font saillie, séparément réparties, sur une face apparente de l'endroit de la base (1).

2. Bande d'étoffe selon la revendication 1, caractérisée en ce que les nopes (2, 3) sont formées de nopes (2) d'un premier type et de nopes (3) d'un deuxième type, une nope (2) du premier type et une nope (3) du deuxième type formant respectivement une paire de nopes insérée dans la base (1).

3. Bande d'étoffe selon la revendication 2, caractérisée en ce que les nopes (2, 3) formant une paire font saillie hors de la base (1), à intervalle l'une de l'autre.

4. Bande d'étoffe selon la revendication 3, caractérisée en ce que l'intervalle est de 3 à 31 mm, de préférence de 10 à 20 mm.

5. Bande d'étoffe selon l'une des revendications 1 à 4, caractérisée en ce que les nopes (2, 3) forment des paires de nopes identiques en ce qui concerne la longueur et la direction d'orientation.

6. Bande d'étoffe selon l'une des revendications 1 à 5, caractérisée en ce que les nopes (2, 3) font saillie, uniformément réparties, sur l'endroit de la base (1).

7. Bande d'étoffe selon l'une des revendications 1 à 6, caractérisée en ce que les nopes (2, 3) font saillie sur l'endroit de la base (1) selon deux directions d'orientation s'étendant à l'opposé l'une de l'autre.

8. Bande d'étoffe selon les revendications 1 à 7, caractérisée en ce que les nopes (2, 3) de chaque direction d'orientation sont réparties sur la base (1) sur des lignes respectives voisines, les lignes de nopes (2, 3) de l'une et l'autre direction d'orientation étant alternées.

9. Bande d'étoffe selon l'une des revendications 1 à 8, caractérisée en ce que la longueur des nopes (2, 3) se situe entre 0,5 et 8 mm.

10. Bande d'étoffe selon l'une des revendications 1 à 9, caractérisée en ce que le nombre des nopes (2, 3) se situe entre 0,5 et 20 nopes/cm², de préférence entre 2 et 10 nopes/cm².

11. Bande d'étoffe selon l'une des revendications 1 à 10, caractérisée en ce que la base (1) est tissée, tricotée ou tuftée,

12. Bande d'étoffe selon l'une des revendications 1 à 11, caractérisée en ce que la base (1) est formée d'un tissu plan avec une armature lâche, de préférence une armature nattée, un croisement satin, une armure sergée ou une armure reps.

13. Bande d'étoffe selon la revendication 12, caractérisée en ce que les nopes (2, 3) sont intégrées sur plusieurs fils de trame (6).

14. Bande d'étoffe selon l'une des revendications 1 à 13, caractérisée en ce que l'envers de la base (1) présente des nopes d'au moins une direction d'orientation.

15. Bande d'étoffe selon l'une des revendications 1 à 14, caractérisée en ce que les nopes (2, 3) s'étendent sous une inclinaison dirigée vers l'avant et vers l'arrière par rapport à la base (1).

16. Bande d'étoffe selon l'une des revendications 1 à 15, caractérisée en ce que la base (1) et les nopes (2, 3) sont formées de multifilaments de fibres très solides, telles que des fibres de verre, de carbone et d'aramide.

17. Pièce composite hybride constituée d'une matrice polymère durcissable (8) et d'au moins un insert de renfort (9) sous la forme d'une bande d'étoffe selon l'une des revendications 1 à 16.

18. Pièce composite hybride selon la revendication 17, caractérisée en ce que plusieurs bandes d'étoffe, disposées en couches l'une au-dessus de l'autre, sont noyées dans la matrice polymère, ces bandes étant appliquées l'une sur l'autre selon un empilage endroit sur endroit et/ou endroit sur envers et/ou envers sur envers.

19. Pièce composite hybride selon la revendication 17 ou 18, caractérisée en ce que la matrice polymère est constituée de matières thermoplastiques, d'élastomères ou de polyesters insaturés.
